# EUROPEAN PATENT SPECIFICATION

(11) **EP 4 012 128 B1**
(45) Date of publication and mention of the grant of the patent: **24.12.2025**
(21) Application number: 20212394.9
(22) Date of filing: 08.12.2020
(51) Int. Cl.: E04B 1/36, F16F 3/087

(54) **DAMPING BRACKET**
DÄMPFUNGSKLAMMER
SUPPORT AMORTISSEUR

(43) Date of publication of application: 15.06.2022
(73) Proprietor: GRANAB Förvaltning AB, 447 24 Vårgårda (SE)
(72) Inventor: BLOM, Fredrik, 441 33 ALINGSÅS (SE); BLOM, Kent, 447 32 VÅRGÅRDA (SE)
(74) Representative: AWA Sweden AB

(56) References cited:
- WO-A1-2020/201517
- CN-A- 108 952 394

## Description

### Technical field of the invention

The present invention relates to a damping bracket for use in buildings, especially wooden buildings.

### Background of the invention

In multiple story buildings, especially those made to a large extent of wooden material, propagation of forces throughout the structure may cause significant problems in the form of instability and vibrations (sound). The forces may be large external forces, such as induced by strong wind, and smaller internal forces, such as movement of furniture over a floor. Thus, there is a need for stabilizing the structure, as well as insulating against sound and vibrations.

There are some solutions to the above mentioned problems. For example, WO 2020/201517 presents a solution that is efficient for cancelling propagation of vibration between a wall and a floor. WO 2020/201517 discloses brackets comprising damping material, specifically one bracket for damping forces along the intersection between floor and wall, and one device for damping forces transverse this intersection. Document CN108952394 discloses a damping bracket with axial and radial damping elements.

As such, the prior art teaches usage of a combination of devices in order to satisfyingly damp forces acting in different directions. Therefore, there is a need for an even more cost efficient solution not requiring such a combination of devices.

### Summary of the invention

An object of the present invention is thus to alleviate at least some of the aforementioned problems with the prior art.

According to a first aspect of the present invention, the above object is achieved by a bracket for damping forces between a wall and a floor of a building is provided. The bracket comprises a first and a second anchoring plate, at least two cylindrical channel elements connected to the first anchoring plate and at least one cylindrical channel element connected to the second anchoring plate, wherein the channel elements are aligned so as to form a channel with a longitudinal axis, wherein the cylindrical channel element of the second anchoring plate is positioned between the cylindrical channel elements of the first anchoring plate, and a connection member extending through the channel. The bracket further has a radial damping element inside each cylindrical channel element, the radial damping element(s) thereby providing damping of radial forces between the anchoring plates, and at least one axial damping element, the axial damping element being arranged between two neighboring cylindrical channel elements for damping axial forces between the anchoring plates, wherein the connection member is extending though a through-hole of each radial damping element and a through-hole of each axial damping element.

Thus, a bracket according to the present invention permits damping in at least two substantially different directions, preferably in a radial direction and an axial direction. As such, a more compact, cost-efficient and material efficient damping bracket is provided. Radial and axial is to be understood as defined by the channel formed by the cylindrical channel elements, i.e. in relation to the longitudinal axis of the channel. When the bracket is mounted between a wall and a floor (or between a wall and a ceiling, or between two walls) the channel will be parallel to an intersection between the wall and the floor (or ceiling or other wall).

The channel elements may be circular cylindrical, i.e. they may have a circular cross-section. Alternatively, they may have a substantially square cross-section, or a polygonal cross-section.

Damping material is to be understood as a material that is suitable for damping forces, i.e. absorbing impulses and vibrations without substantially propagate them to adjacent materials and without permanently deforming. Examples of such a material are Vibrafoam^{™}, Vibradyn^{™}, Vibisol^{™}, Sylomer^{™}, Sylodyn^{™}, EPDM rubber or any other elastomer or the like.

Each radial damping element may be annular, i.e. formed to completely surround the connection member. Alternatively, the radial damping element may partially surround the connection member.

The radial damping element and the axial damping element may be made of the same material to facilitate manufacturing. However, depending on design and damping requirement, it may be beneficial to have different stiffness in the radial and axial damping elements, respectively.

The anchoring plates are preferably made of a metal material, such as steel. The cylindrical channel elements are preferably made of the same material as the anchoring plates. Alternatively, any cylindrical channel element is made of a different material than the anchoring plate to which it is connected.

In some embodiments, the first anchoring plate comprises two cylindrical channel elements and the second anchoring plate comprises one cylindrical channel elements; wherein a first damping element is arranged between the cylindrical channel element of the second anchoring plate and one of the two cylindrical channel elements of the first anchoring plate; and wherein a second damping element is arranged between the cylindrical channel element of the second anchoring plate and the other of the two cylindrical channel elements of the first anchoring plate.

By providing a bracket that has one cylindrical channel element of one anchoring plate arranged between two cylindrical channel elements of the other anchoring plate, a symmetrical bracket is provided. As such, the bracket may damp forces coming from one direction along the longitudinal axis of the channel, or the other direction along the longitudinal axis of the channel equally well.

In some embodiments, the cylindrical channel elements are coaxially arranged. This provides a symmetrical design, where all axial damping elements may have identical shape. This facilitates manufacturing and reduces cost.

According to the invention, the bracket further comprises rigid, annular discs arranged on each axial end of each axial damping element.

By arranging rigid discs on either end of the damping element, any force acting on the axial damping element via the disc will be distributed by the disc such that, e.g., the damping element will be less damaged.

The disc may be made of any stiff, hard material, such as a ceramic or metal.

According to the invention, the discs each have a respective peripheral rim portion which at least partially surrounds the axial damping element. Each axial damping element is thus enclosed by two bowl shaped discs.

A through-hole of each annular disc may have a diameter which is larger than a diameter of the connection member. This prevents forces from the connection member to be transferred to the discs. In this case, a peripheral rim portion, which secures the discs to the axial damping elements, will also serve to keep the discs centered around the connection member.

According to an exemplary embodiment, the axial damping element has a radial extension greater than the respective radial extensions of the neighboring cylindrical channel elements.

By providing an axial damping element with a radial extension greater than that of a neighboring cylindrical channel element, the axial damping element has a large area to receive and absorb forces from the neighboring cylindrical channel element. As such, the axial damping element may be made shorter in an axial direction, and thus, a more compact bracket may be provided.

In some embodiments, at least one axial damping element has a length along the longitudinal axis of the channel that is at most 25 mm, preferably at most 20 mm, more preferably at most 10 mm.

The axial damping element may e.g. have a length along the longitudinal axis such that, when the bracket absorbs forces, the axial damping element is pressed by the discs arranged on element to the extent that the peripheral rim portions of the discs come in direct physical contact and abuts on each other. As such, the axial damping element may only be contracted in the longitudinal direction by a distance between the peripheral rim portions. As such, the axial damping element will be less worn out.

According to an exemplary embodiment, the amount of damping material of a radial cross-section of the channel is at least 60%, preferably at least 75%, or more preferably at least 90%.

This ratio determines the overall density of the total amount of material that is held within the channel, and therefore its mechanical properties.

According to an exemplary embodiment, the first anchoring plate comprises a main surface extending in a first plane parallel to the longitudinal axis of the channel and the second anchoring plate comprises a main surface extending in a second plane parallel to the longitudinal axis of the channel, and the longitudinal axis is offset with respect to a line of intersection between the first plane and the second plane.

As such, the cylindrical channel elements do not lie in the intersection of the planes defined by the anchoring plates. With this constellation, when mounting the damping bracket between e.g. a wall and a floor, the channel elements and therefore the channel does not have any contact with the wall, the floor or the intersection between them.

According to an exemplary embodiment, the connection member is fixated by two radially extending end portions arranged at a respective end of the connection member. By fixating the connection member, it is prevented from sliding out of the channel.

According to an exemplary embodiment, the end portions have a respective radial extension smaller than the radial extension of a neighboring cylindrical channel element. With this design, the end portion will not be in physical contact with the cylindrical channel element. As such, forces from the connection member or the pin will not be translated to the cylindrical channel element through the end disc.

Additional axial damping elements may be arranged between a respective radially extending end portion and a respective neighboring cylindrical channel element.

According to a second aspect of the present invention, a wall-to-floor joint is provided, the wall-to-floor comprising a bracket according to the first aspect of the present invention, wherein the first anchoring plate is mounted to a lower part of a wall section, and the second anchoring plate is mounted to a floor section, and wherein a relative angular position of the first anchoring plate to the second anchoring plate is substantially fixated.

By providing a wall-to-floor joint comprising the bracket according to the first aspect of the present invention, forces acting in at least two different directions between the wall and the floor are damped.

### Brief description of the drawings

For exemplifying purposes, the invention will be described in closer detail in the following with reference to exemplary embodiments thereof illustrated in the attached drawings, wherein:
Fig. 1 is a perspective view of the bracket according to a first embodiment of the present invention.
Fig. 2 is an exploded view of the bracket in Fig. 1.
Fig. 3a is a cross-sectional view of the bracket in Fig. 1.
Fig. 3b is a cross-sectional view of an alternative embodiment of the bracket in Fig. 1.
Fig. 4 is a cross-sectional view along the longitudinal axis of the bracket in Fig. 1.
Fig. 5 is a perspective view of an alternative embodiment of the bracket.
Fig. 6 is a perspective view of a wall-to-floor joint where two brackets according to an embodiment of the present invention have been mounted.

### Detailed description of the invention

In the following detailed description, some embodiments of the present invention will be described. It is however to be understood that, unless anything else is specifically indicated, features of the different embodiments are exchangeable between the embodiments and may be combined in different ways. Even though in the following description, numerous specific details are set forth to provide a more thorough understanding of the present invention, it will be apparent to one skilled in the art that the present invention may be practiced without these specific details. In other instances, well known constructions or functions are not described in detail, so as not to obscure the present invention.

The invention will now by way of example be described in more detail by means of embodiments and with reference to the accompanying drawings.

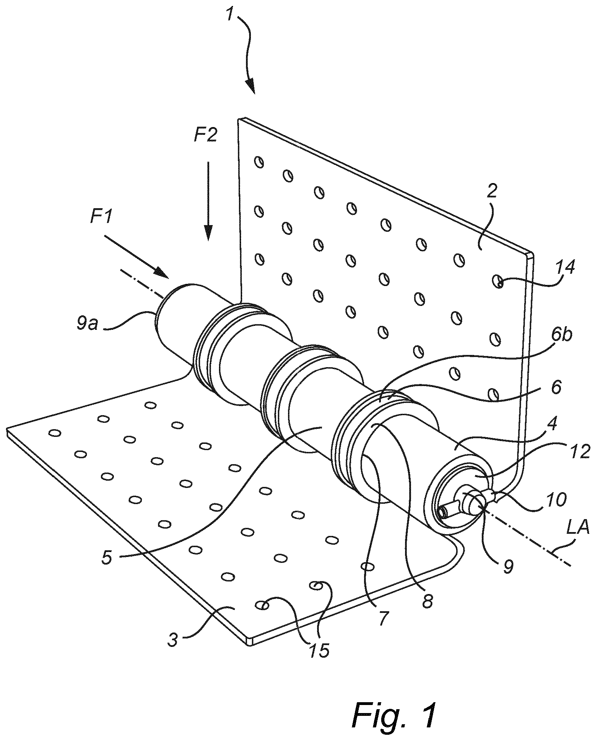

Fig. 1 shows a bracket 1 comprising a first anchoring plate 2 and a second anchoring plate 3. The anchoring plates are adapted to be fastened to a surface, such as a wall 17 or a floor 18. The anchoring plates 2, 3 are preferably formed by a metal material such as steel, but can be chosen from any type of material suitable for the field of application of the bracket. The first anchoring plate 2 comprises a plurality of fastening holes 14 arranged to receive a fastening means (not shown), such as a nail or a screw, so that the plate 2 may be fastened to a surface of a wall or a floor. The second anchoring plate 3 comprises a corresponding plurality of fastening holes 15.

The thickness of the anchoring plates 2, 3 is such that, given the material the anchoring plates are made of, they are able to withstand forces typically occurring between walls and floor in a building. The respective thickness of the anchoring plates, or at least one of the anchoring plates, may e.g. be at least 4 mm, or e.g. between 4 mm and 10 mm.

The anchoring plates 2, 3 each comprises two cylindrical channel elements 4, 5. The channel elements 4, 5 shown in this exemplary embodiment have a tubular shape with a circular cross-section, and as such they define a circumference of a tubular space. They are, however, not restricted to this shape, and may have a cuboid shape, a polygonal shape, an oval shape etc. The channel elements 4 of the first anchoring plate and the channel elements 5 of the second anchoring plate are alternatingly arranged adjacent to each other as to form a channel defining a longitudinal axis LA.

The cylindrical channel elements 4, 5 are furthermore separated from each other by axial damping elements 6, such that a cylindrical channel element 4 of the first anchoring plate 2 is separated from a cylindrical element 5 of the second anchoring plate 3 in an axial direction, i.e. along the longitudinal axis LA, by an axial damping element 6. However, the bracket 1 is not limited to any certain number of axial damping elements 6. As such, the bracket 1 may e.g. only comprise one axial damping element 6. As such, not all neighboring cylindrical channel elements 4, 5 need to be separated by an axial damping element 6.

The axial damping element 6 is adapted to receive and absorb axial forces F1 acting on the bracket 1 in a direction parallel to the longitudinal axis LA.

Here, the axial damping elements 6 are shown to have a radial extension in relation to the longitudinal axis LA that is greater than a radial extension of any of the cylindrical channel element 4, 5. Alternatively, the axial damping elements 6 may have a radial extension substantially equal to that of the respective radial extension of the cylindrical channel elements 4, 5.

The bracket further comprises a radial damping element 13 adapted to damp radial forces F2 acting on the bracket 1 in a direction transverse or radial to the longitudinal axis LA. The radial damping element 13 is adapted to be arranged in a cylindrical channel element 4, 5.

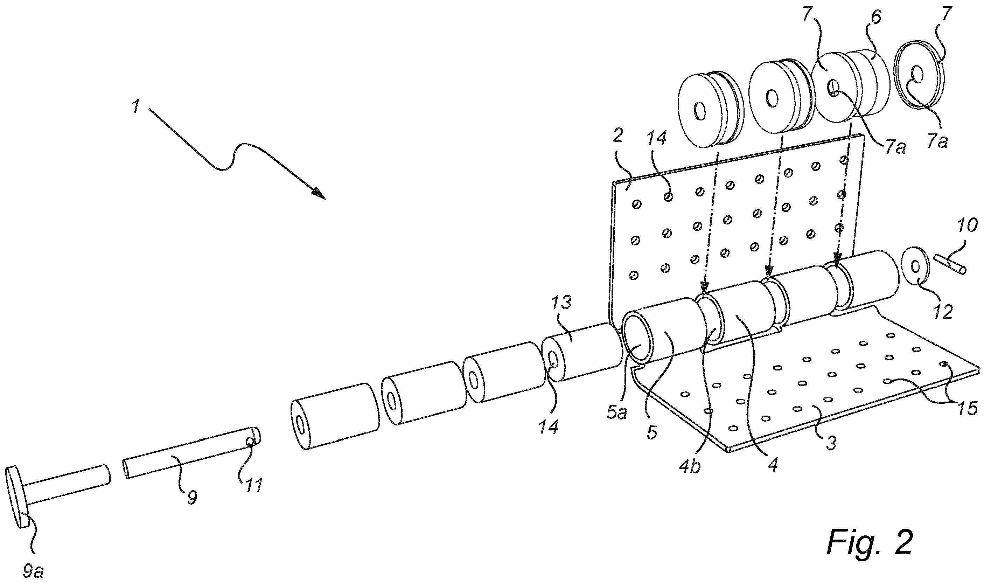

The bracket 1 further comprises discs 7 arranged between each axial damping element 6 and each adjacent cylindrical channel element 4, 5. Each disc 7 here comprises a peripheral rim portion 8 such that the disc 7 is substantially bowl shaped. The disc 7 is arranged and abuts on an axial surface 6a (visible in Fig. 2) of the damping element 6 such that the peripheral rim portion 8 surrounds the axial damping element 6 and partially covers the radial surface 6b. Here, there is a disc 8 arranged on both axial surfaces 6a of the axial damping element 6.

The peripheral rim portion 8 may e.g. extend around the entire rim of the damping element 6. For the case where the damping element 6 is circularly cylindrical, the peripheral rim portion extend around the entire circumference of the damping element 6. The peripheral rim portion 8 may extend along a part of the axial length of the axial damping element 6.

The bracket 1 further comprises a connection member 9 that is arranged within the channel. The connection member 9 is preferably made of a metal material such as steel. Here, the longitudinal axis LA is shown to substantially coincide with a central axis of the connection member 9. However, the longitudinal axis LA of the channel may not substantially coincide with the central axis of the connection member 9. The connection member 9 aligns the cylindrical channel elements 4, 5 and helps holding the bracket 1 together. Here, the connection member 9 is shown to be longer along the longitudinal axis LA than the combined length of the cylindrical channel elements 4, 5. Furthermore, the connection member 9 is prevented to move along the longitudinal axis by a cap 9a arranged on one end of the connection member 9. Furthermore, the connection member 9 comprises on an opposite side of the cap 9a a through-hole 11. A pin 10 having an extension transverse to the longitudinal axis LA is arranged in the through-hole 11. The pin 10 thus prevents the reinforcement member from sliding out of the channel. Alternatively, the connection member 9 may comprise a second cap 9a instead of the pin 10.

Moreover, an end disc 12 is arranged at the end of the cylindrical channel element 4. The end disc 12 abuts and is arranged on the radial damping element 13 that is arranged within the cylindrical channel element 4, such that the cylindrical channel element 4 is protected against impacts from the pin 10, when the pin is arranged within the through-hole 11 of the connection member 9.

In Fig. 2, the bracket 1 is shown in an exploded view. Four radial damping elements 13 are shown, wherein each radial damping element is adapted to be arranged in a respective cylindrical channel element 4, 5. Each radial damping element 13 is arranged so that it abuts on and presses against a respective inner surface 4a, 5a of the cylindrical channel elements 4, 5.

The radial damping element 13 may for example not have cylindrical shape, but any shape that matches the cylindrical channel element 4, 5 within which it is to be arranged. The shape may e.g. be a cuboid shape, an elongated cuboid shape, a polygonal shape, an oval shape etc. Further yet, radial damping elements 13 may not be made of the same material, but rather made of different damping materials with different damping properties. Axial damping elements 7 may be made of the same material as radial damping elements 13. Alternatively, any axial damping element 7 may be made of a different material compared to any other axial damping element 7 or radial damping element 13. Examples of materials are Vibrafoam^{™}, Vibradyn^{™}, Vibisol^{™}, Sylomer^{™}, Sylodyn^{™}, EPDM rubber or any other elastomer or the like.

The radial damping elements 13 further comprises a respective through-hole 14 in which the connection member 9 is adapted to be arranged. Thus, the through-hole 14 preferably has the same diameter as the connection member 9. The through-holes 14 are here shown to be substantially centrally arranged in each radial damping element 13 however the invention is not limited to this embodiment. The through-holes 14 may e.g. be arranged offset from a center of each radial damping element 13.

The disc 7 further comprises a through-hole 7a. The through-hole 7a is adapted to be aligned with the through-hole 14 of the radial damping element 13 such that the connection member 9 may be inserted through both through-holes 7a,14.

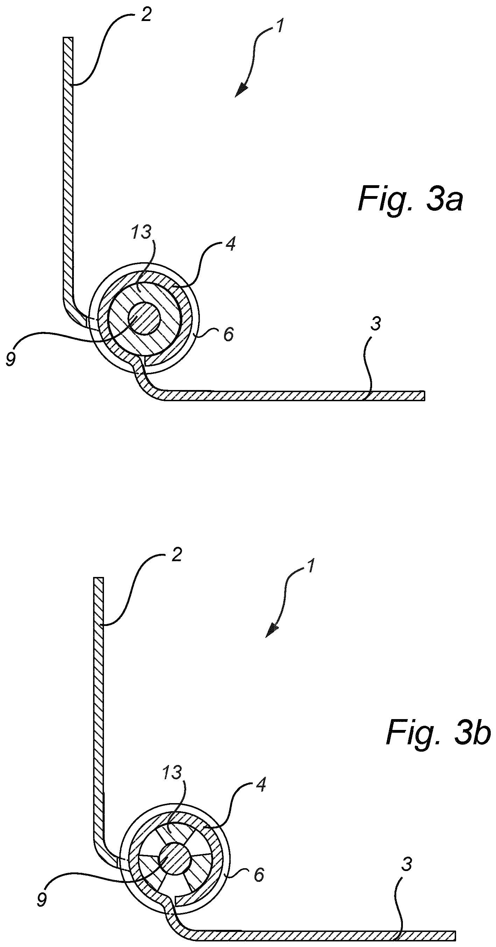

In Fig. 3a a cross-section view of the invention is provided. Here, the arranging of the cylindrical channel elements 4,5 offset to a line of intersection between the plane in which a main surface 2a of the first anchoring plate 2 extends and the plane in which a main surface 3b of the second anchoring plate 3 extends is clearly visible. In the exemplary use of the damping bracket where the first anchoring plate 2 is fastened to a wall 17 and the second anchoring plate 3 is fastened to a floor 18, the channel elements 4, 5 and therefore the channel and the radial damping elements 13 are substantially distanced from the wall 17, the floor 18 and the intersection of them. Here it is shown that the amount of damping material of the radial cross-section of the channel is at least 50%. The amount of damping material of the radial cross-section may be even larger. For example, the amount of damping material may be at least 60%, preferably at least 75%, or more preferably at least 90%.

In Fig. 3b, a cross-sectional view of an alternative embodiment of the invention is provided. Here, the radial damping element 13 does not completely surround the connection member 9, but is rather comprised by three sections of damping material arranged at different angular positions around the connection member 9. The damping material of the damping element 13 may be arranged in any other pattern.

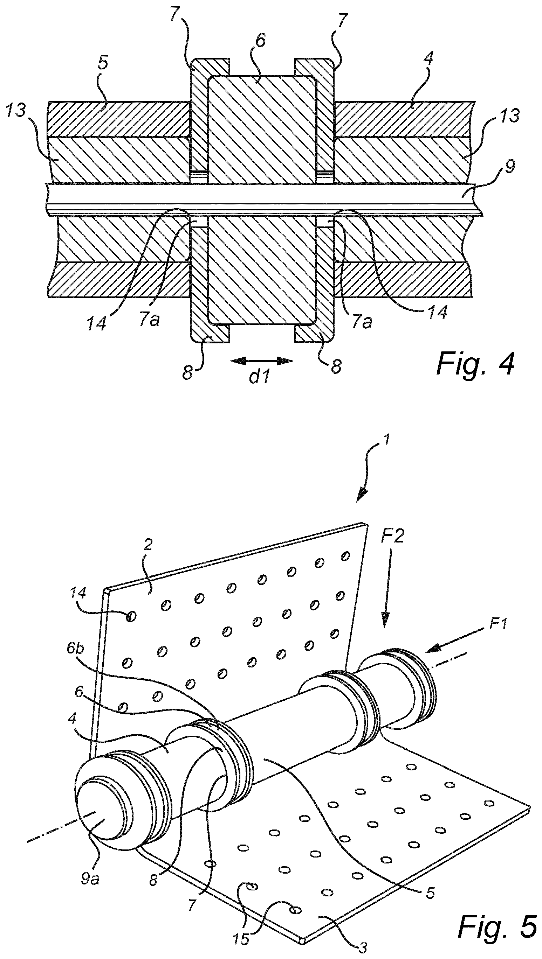

Fig 4 shows a cross-section taken along a longitudinal direction of the channel. Here, the connection member 9 when being arranged through the radial damping element 13 and the axial damping element 6 is visible. The through-hole 14 of the radial damping element has a diameter substantially similar to a diameter of the connection member 9. The through-hole of the disc 7, however, has a diameter that is larger than the diameter of the connection member 9. The discs 7 are arranged such that the peripheral rim portions 8 are arranged at a distance d1 from each other. They may e.g. be arranged at the distance d1 when the bracket 1 does not absorb any forces F1. When the bracket absorbs forces, the discs 7 are adapted to press the axial damping element 6 such that the distance d1 between the peripheral rim portions 8 is reduced. In some embodiments, the peripheral rim portions 8 are adapted to press the axial damping element 6 such that the peripheral rim portions 8 come in direct physical contact and abuts on each other, i.e. such that the distance d1 is null. As such, the axial damping element 6 may only be contracted in the longitudinal direction by a distance d1 between the peripheral rim portions.

Fig. 5 shows an exemplary bracket 1 in which the first anchoring plate 2 comprises two cylindrical channel elements 4, wherein the second anchoring plate 3 only comprises one cylindrical channel element 5. Here, the cylindrical channel element 5 of the second anchoring plate is arranged between the cylindrical channel elements 4 of the first anchoring plate 2. As such, the bracket 1 is symmetrical with regards to the capability thereof to absorb forces coming from both directions parallel to or along the longitudinal axis LA of the channel. As such, the bracket 1 is equally suitable for damping a force F1 acting on the bracket 1 from the right, as seen in Fig. 5, or F3 acting on the bracket 1 from the left.

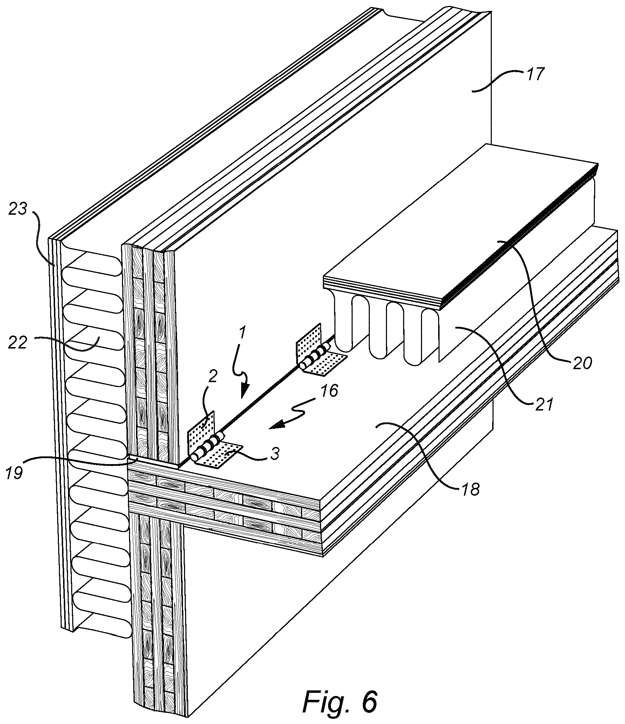

Fig. 6 shows a wall-to-floor joint 16 according to the second aspect of the present invention, comprising a bracket 1 mounted between a wall 17 and a floor 18. The bracket 1 is fastened to the wall 17 and the floor 18 due to the first anchoring plate 2 being attached to the wall 17 and the second anchoring plate 3 being attached to the floor 18. The wall 17 is further separated from the floor 18 by insulating material 19, whereby the wall-to-floor joint 16 stabilizes the structure as well as dampen forces and vibrations throughout the structure. Here, the floor 18 is shown to be an underlying surface to a second floor 20, the second floor 20 being arranged above the floor 18 and separated by insulating material 21. The second floor 20 is a floor adapted to be walked upon. Furthermore, the wall 17 is separated from an outer wall 23 by insulating material 22.

Even though the bracket is mounted in a certain position in Fig. 4, other positions are possible, such as having the channel arranged in an indention larger than the channel in the wall 17 or the floor 18, thereby leaving more room in the angle between the wall 17 and the floor 18 while still achieving a damping of energy or vibrations between them.

The wall-to-floor joint 16 is further mounted such that the angular position of the first anchoring plate 2 with respect to the second anchoring plate 3 remains substantially constant. That is, any force acting on the bracket 1 within a range of forces the bracket 1 is adapted to dampen will not substantially alter the respective positions of the first anchoring plate 2 and the second anchoring plate 3.

The invention has now been described with reference to specific embodiments. It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting to the claim. The word "comprising" does not exclude the presence of other elements or steps than those listed in the claim. The word "a" or "an" preceding an element does not exclude the presence of a plurality of such elements. The scope of protection is defined by the appended claims.

## Claims

1. A damping bracket (1) intended to be mounted between a wall and
a floor of a building, the bracket comprising:
a first and a second anchoring plate (2,3),
at least two cylindrical channel elements (4) connected to said first anchoring plate and at least one cylindrical channel element (5) connected to said second anchoring plate, wherein said channel elements are aligned so as to form a channel with a longitudinal axis, wherein the cylindrical channel element of the second anchoring plate is positioned between the cylindrical channel elements of the first anchoring plate; and
a connection member extending through said channel;
a radial damping element (13) provided inside each cylindrical channel element, said radial damping element(s) thereby providing damping of radial forces between said anchoring plates, and
at least one axial damping element (6), said axial damping element being arranged between two neighboring cylindrical channel elements for damping axial forces between said anchoring plates,
said connection member extending though a through-hole of each radial damping element and a through-hole of each axial damping element and
**characterised in that** the damping bracket further comprises a rigid, annular disc arranged on each axial end of each axial damping element, wherein every disc has a respective peripheral rim portion (8) which at least partially surrounds the axial damping element, wherein each disc comprises a through-hole, wherein said through-hole of said disc has a diameter that is larger than a diameter of said connection member.

2. The bracket according to claim 1, wherein said cylindrical channel elements are coaxially arranged.

3. The bracket according to claim 1 or 2, wherein said axial damping element has a radial extension greater than a radial extension of said radial damping element(s).

4. The bracket according to any preceding claim, wherein the amount of damping material of a radial cross-section of said channel is at least 60%, preferably at least 75%, or more preferably at least 90%.

5. The bracket according to any preceding claim, wherein said axial damping damping element has a length along said longitudinal axis of said channel that is at most 25 mm, preferably at most 20 mm, more preferably at most 10 mm.

6. The bracket according to any preceding claim, wherein said first anchoring plate comprises a main surface extending in a first plane parallel to said longitudinal axis of said channel and said second anchoring plate comprises a main surface extending in a second plane parallel to said longitudinal axis of said channel, and wherein said longitudinal axis is offset with respect to a line of intersection of said first plane with said second plane.

7. The bracket according to any preceding claim, wherein the connection member is fixated by two radially extending end portions arranged at a respective end of the connection member.

8. The bracket according to claim 7, wherein said end portions have a respective radial extension smaller than the radial extension of a neighboring cylindrical channel element.

9. The bracket according to claim 7 or 8, comprising two further axial damping elements arranged between a respective radially extending end portion and a respective neighboring cylindrical channel element.

10. A wall-to-floor joint, comprising a bracket according to one of the preceding claims, wherein the first anchoring plate is mounted to a lower part of a wall section, and the second anchoring plate is mounted to a floor section, and wherein a relative angular position of said first anchoring plate to said second anchoring plate is substantially fixated.

## Patentansprüche

1. Dämpfungsbügel (1), der zum Montieren zwischen einer Wand und einem Fußboden eines Gebäudes bestimmt ist, wobei der Bügel Folgendes umfasst:
eine erste und eine zweite Verankerungsplatte (2, 3),
mindestens zwei zylindrische Kanalelemente (4), die mit der ersten Verankerungsplatte verbunden sind, und mindestens ein zylindrisches Kanalelement (5), das mit der zweiten Verankerungsplatte verbunden ist, wobei die Kanalelemente so ausgerichtet sind, dass sie einen Kanal mit einer Längsachse bilden, wobei das zylindrische Kanalelement der zweiten Verankerungsplatte zwischen den zylindrischen Kanalelementen der ersten Verankerungsplatte positioniert ist, und
ein sich durch den Kanal erstreckendes Verbindungsglied, ein in jedem zylindrischen Kanalelement vorgesehenes radiales Dämpfungselement (13), wobei das/die radiale/n Dämpfungselement/e dadurch für ein Dämpfen von Radialkräften zwischen den Verankerungsplatten sorgt/en, und
mindestens ein axiales Dämpfungselement (6), wobei das axiale Dämpfungselement zwischen zwei benachbarten zylindrischen Kanalelementen zur Dämpfung von Axialkräften zwischen den Verankerungsplatten angeordnet ist, wobei sich das Verbindungsglied durch ein Durchgangsloch jedes radialen Dämpfungselements und ein Durchgangsloch jedes axialen Dämpfungselements erstreckt und **dadurch gekennzeichnet ist, dass** der Dämpfungsbügel ferner eine starre ringförmige Scheibe umfasst, die an jedem axialen Ende jedes axialen Dämpfungselements angeordnet ist, wobei jede Scheibe einen jeweiligen Umfangsrandabschnitt (8) aufweist, der das axiale Dämpfungselement mindestens teilweise umgibt, wobei jede Scheibe ein Durchgangsloch umfasst, wobei das Durchgangsloch der Scheibe einen Durchmesser aufweist, der größer als ein Durchmesser des Verbindungsglieds ist.

2. Bügel nach Anspruch 1, wobei die zylindrischen Kanalelemente koaxial angeordnet sind.

3. Bügel nach Anspruch 1 oder 2, wobei das axiale Dämpfungselement eine radiale Erstreckung aufweist, die größer als eine radiale Erstreckung des oder der radialen Dämpfungselements/e ist.

4. Bügel nach einem der vorhergehenden Ansprüche, wobei die Menge an Dämpfungsmaterial eines radialen Querschnitts des Kanals mindestens 60%, vorzugsweise mindestens 75% oder weiter bevorzugt mindestens 90% beträgt.

5. Bügel nach einem der vorhergehenden Ansprüche, wobei das axiale Dämpfungselement eine Länge entlang der Längsachse des Kanals aufweist, die höchstens 25 mm, vorzugsweise höchstens 20 mm, weiter bevorzugt höchstens 10 mm beträgt.

6. Bügel nach einem der vorhergehenden Ansprüche, wobei die erste Verankerungsplatte eine Hauptfläche umfasst, die sich in einer parallel zu der Längsachse des Kanals verlaufenden ersten Ebene erstreckt, und die zweite Verankerungsplatte eine Hauptfläche umfasst, die sich in einer parallel zu der Längsachse des Kanals verlaufenden zweiten Ebene erstreckt, und wobei die Längsachse in Bezug auf eine Schnittlinie der ersten Ebene mit der zweiten Ebene versetzt ist.

7. Bügel nach einem der vorhergehenden Ansprüche, wobei das Verbindungsglied durch zwei sich radial erstreckende Endabschnitte, die an einem jeweiligen Ende des Verbindungsglieds angeordnet sind, fixiert ist.

8. Bügel nach Anspruch 7, wobei die Endabschnitte eine jeweilige radiale Erstreckung aufweisen, die kleiner als die radiale Erstreckung eines benachbarten zylindrischen Kanalelements ist.

9. Bügel nach Anspruch 7 oder 8, umfassend zwei weitere axiale Dämpfungselemente, die zwischen einem jeweiligen sich radial erstreckenden Endabschnitt und einem jeweiligen benachbarten zylindrischen Kanalelement angeordnet sind.

10. Wand-zu-Boden-Verbindung, umfassend einen Bügel nach einem der vorhergehenden Ansprüche, wobei die erste Verankerungsplatte an einem unteren Teil eines Wandabschnitts montiert ist und die zweite Verankerungsplatte an einem Fußbodenabschnitt montiert ist und wobei eine relative Winkelposition der ersten Verankerungsplatte an der zweiten Verankerungsplatte im Wesentlichen fixiert ist.

## Revendications

1. Support amortisseur (1) destiné à être monté entre un mur et un sol d'un bâtiment, le support comprenant :
une première et une seconde plaque d'ancrage (2, 3),
au moins deux éléments de canal cylindriques (4) reliés à ladite première plaque d'ancrage et au moins un élément de canal cylindrique (5) relié à ladite seconde plaque d'ancrage, lesdits éléments de canal étant alignés de sorte à former un canal avec un axe longitudinal, l'élément de canal cylindrique de la seconde plaque d'ancrage étant positionné entre les éléments de canal cylindriques de la première plaque d'ancrage ; et
un élément de liaison s'étendant au travers dudit canal ; un élément d'amortissement radial (13) situé à l'intérieur de chaque élément de canal cylindrique, ledit ou lesdits éléments d'amortissement radial assurant ainsi un amortissement des forces radiales entre lesdites plaques d'ancrage, et
au moins un élément d'amortissement axial (6), ledit élément d'amortissement axial étant disposé entre deux éléments de canal cylindriques voisins pour amortir les forces axiales entre lesdites plaques d'ancrage, ledit élément de liaison s'étendant au travers d'un trou traversant de chaque élément d'amortissement radial et d'un trou traversant de chaque élément d'amortissement axial et **caractérisé en ce que** le support d'amortissement comprend en outre un disque annulaire rigide disposé à chaque extrémité axiale de chaque élément d'amortissement axial, chaque disque ayant une partie de bord périphérique (8) respective qui entoure au moins partiellement l'élément d'amortissement axial, chaque disque comprenant un trou traversant, ledit trou traversant dudit disque ayant un diamètre qui est supérieur au diamètre dudit élément de liaison.

2. Support selon la revendication 1, lesdits éléments de canal cylindriques étant disposés coaxialement.

3. Support selon la revendication 1 ou 2, ledit élément d'amortissement axial ayant une extension radiale supérieure à une extension radiale dudit ou desdits éléments d'amortissement radial.

4. Support selon l'une quelconque des revendications précédentes, la quantité de matériau d'amortissement d'une section transversale radiale dudit canal étant d'au moins 60 %, de préférence d'au moins 75 %, ou de préférence encore d'au moins 90 %.

5. Support selon l'une quelconque des revendications précédentes, ledit élément d'amortissement axial ayant une longueur le long dudit axe longitudinal dudit canal qui est d'au plus 25 mm, de préférence d'au plus 20 mm, de préférence encore d'au plus 10 mm.

6. Support selon l'une quelconque des revendications précédentes, ladite première plaque d'ancrage comprenant une surface principale s'étendant dans un premier plan parallèle audit axe longitudinal dudit canal et ladite seconde plaque d'ancrage comprenant une surface principale s'étendant dans un second plan parallèle audit axe longitudinal dudit canal, et ledit axe longitudinal étant décalé par rapport à une ligne d'intersection dudit premier plan avec ledit second plan.

7. Support selon l'une quelconque des revendications précédentes, l'élément de liaison étant fixé par deux parties d'extrémité s'étendant radialement disposées au niveau d'une extrémité respective de l'élément de liaison.

8. Support selon la revendication 7, lesdites parties d'extrémité ayant une extension radiale respective inférieure à l'extension radiale d'un élément de canal cylindrique voisin.

9. Support selon la revendication 7 ou 8, comprenant deux autres éléments d'amortissement axial disposés entre une partie d'extrémité s'étendant radialement respective et un élément de canal cylindrique voisin respectif.

10. Joint mur-plancher, comprenant un support selon l'une des revendications précédentes, la première plaque d'ancrage étant montée sur une partie inférieure d'une section de paroi, et la seconde plaque d'ancrage étant montée sur une section de plancher, et une position angulaire relative de ladite première plaque d'ancrage par rapport à ladite seconde plaque d'ancrage étant sensiblement fixée.
